# EUROPÄISCHE PATENTANMELDUNG

(11) **EP 1 859 756 A2**
(43) Veröffentlichungstag der Anmeldung: **28.11.2007**
(21) Anmeldenummer: 07010220.7
(22) Anmeldetag: 23.05.2007
(51) Int. Cl.: A61C 7/10, A61C 7/36

(54) **Kieferorthopädische Regulierungsvorrichtung**

(30) Priorität: 24.05.2006 DE 102006024856
(71) Anmelder: SCHEU-DENTAL GmbH, 58642 Iserlohn (DE)
(72) Erfinder: Dr. Höhle, Joachim, 33129 Delbrück (DE); Dr. Mischke, Karl-Ludwig, Waldeyer Strasse 30, 48149 Münster (DE)
(74) Vertreter: Isfort, Olaf

(57) **Zusammenfassung**

Die Erfindung betrifft eine kieferorthopädische Regulierungsvorrichtung mit einer Oberkieferplatte (2), einer Unterkieferplatte (4) und mit an der Oberkieferplatte (2) und an der Unterkieferplatte (4) angeordneten Positionierungselementen, die derart zusammenwirken, dass eine sagittale und/oder transversale Verschiebung des Unterkiefers (3) gegenüber dem Oberkiefer (1) nach ventral und/oder lateral erfolgt. Die Erfindung schlägt vor, dass die Positionierungselemente einen Positionierungsstift (10), der an einer der Platten (2, 4) angeordnet ist, und eine an der jeweils anderen Platte (4, 2) angeordnete Positionierungsbohrung (11) umfassen, in welcher der Positionierungsstift (10) axial beweglich geführt ist.

## Beschreibung

Die Erfindung betrifft eine kieferorthopädische Regulierungsvorrichtung mit einer Oberkieferplatte, einer Unterkieferplatte und mit an der Oberkieferplatte und an der Unterkieferplatte angeordneten Positionierungselementen, die derart zusammenwirken, dass eine sagittale und/oder transversale Verschiebung des Unterkiefers gegenüber dem Oberkiefer nach ventral und/oder lateral erfolgt.

Solche Vorrichtungen, so genannte Doppelvorschubplatten-Systeme oder Aktivatoren, sind aus dem Stand der Technik bekannt. Sie werden zur Korrektur von Fehlstellungen des Unterkiefers in sagittaler und/oder transversaler Richtung, insbesondere zum relativen Vorschub des Unterkiefers bei Unterkieferrücklage (Retrognathie), eingesetzt. Doppelvorschubplatten-Systeme bestehen aus einer Ober- und einer Unterkieferplatte. Die beiden Platten weisen Positionierungselemente auf, die derart zusammenwirken, dass bei schließendem Kiefer der Unterkiefer sagittal und/oder transversal verschoben und dabei mehr oder weniger zwangsweise in die Sollposition gebracht wird. Aktivatoren unterscheiden sich von den Vorschubdoppelplatten-Systemen dadurch, dass die Ober- und Unterkieferplatten beim Öffnen des Mundes zusammen bleiben (es ist auch bekannt, die Ober- und Unterkieferplatten von Aktivatoren als ein zusammenhängendes Teil einstückig zu fertigen) und sich von den Zähnen eines oder beider Kiefer lösen. Bei den Vorschubdoppelplatten-Systemen bleiben die beiden Platten im jeweiligen Kiefer hängen und lösen sich beim Öffnen des Mundes voneinander.

Aus der DE 197 44 415 A1 ist ein Doppelvorschubplatten-System bekannt, bei welchem eine Oberkieferplatte und eine Unterkieferplatte in einer therapeutischen Schließstellung miteinander verriegelbar sind. Hierzu weist eine Platte des vorbekannten Systems zur Korrektur des Ober- oder Unterkiefers in sagittaler Richtung mehrere Führungshülsen auf, in welche Führungsdrähte eingreifen, die an der jeweils anderen Platte befestigt sind. Je nach Anordnung der Führungshülsen und der Führungsdrähte an der Oberkieferplatte oder an der Unterkieferplatte ist ein sagittales Korrigieren einer der beiden Kiefer nach vorne oder nach hinten möglich. Durch entsprechende Manipulationen an den Führungshülsen und/oder durch Verbiegen (zur Feineinstellung) der Führungsdrähte können die Oberkieferplatte oder die Unterkieferplatte gegeneinander in sagittaler Richtung in kleinen Schritten versetzt werden. Dies erlaubt eine sukzessive Veränderung der Therapieposition des Unterkiefers in sagittaler Richtung.

Das vorbekannte Doppelvorschubplatten-System hat eine Reihe von Nachteilen. Nachteilig ist zum einen, dass die recht großvolumigen Oberkiefer- und Unterkieferplatten fest miteinander verriegelt sind, so dass für den Benutzer der Vorrichtung Kieferbewegungen und Sprechen kaum möglich sind. Nachteilig ist bei dem vorbekannten System weiterhin, dass die Drähte zur Verblockung der Unterkieferplatte mit der Oberkieferplatte durch die über den Unterkiefer einwirkenden Kräfte in sagittaler und transversaler Richtung stark beansprucht werden. Dies führt dazu, dass die Drähte häufig brechen. Somit ist das vorbekannte System sehr reparaturanfällig. Der Austausch der Drähte ist labortechnisch relativ aufwändig und beim Austausch der Drähte wird eine aufwändige Neupositionierung der Platten zueinander notwendig, weil die Information bezüglich der ursprünglichen Relativposition von Ober- und Unterkieferplatte verloren geht.

Vor diesem Hintergrund ist es Aufgabe der Erfindung, eine verbesserte kieferorthopädische Regulierungsvorrichtung zu schaffen.

Diese Aufgabe löst die Erfindung ausgehend von einer kieferorthopädischen Regulierungsvorrichtung der eingangs angegebenen Art dadurch, dass die Positionierungselemente einen an einer der Platten angeordneten Positionierungsstift und eine an der jeweils anderen Platte angeordnete Positionierungsbohrung umfassen, in welcher der Positionierungsstift axial beweglich geführt ist.

Vorzugsweise ist der Positionierungsstift an der Unterkieferplatte ventral im Wesentlichen in der Mediansagittalen liegend angeordnet.

Das erfindungsgemäße System hat den Vorteil, dass es angenehmer zu tragen ist als das aus dem Stand der Technik bekannte System. Die Unterkieferplatte ist auf die notwendigsten Elemente reduziert und damit sehr grazil. Die erfindungsgemäße Regulierungsvorrichtung ermöglicht ein Öffnen der Kiefer. Beim Öffnen der Kiefer bleibt die gesamte Apparatur - soweit es die Bezahnungssituation des Patienten aufgrund des Zahnwechsels zulässt - im Oberkiefer (in Ausnahmefällen im Unterkiefer) hängen. Durch die grazile Konstruktion im Unterkiefer wird das Sprechen erleichtert.

Die erfindungsgemäße Ausgestaltung der Positionierungselemente sorgt dafür, dass in der Schließstellung der Kiefer die Therapieposition zuverlässig hergestellt wird. Der Positionierungsstift kann ausreichend stabil ausgeführt werden, so dass sich die erfindungsgemäße Regulierungsvorrichtung durch eine geringe Reparaturanfälligkeit auszeichnet. Sollte der Positionierungsstift einmal brechen, ist ein einfacher Austausch gegen einen neuen Stift in kürzester Zeit ohne zeitaufwändige Neupositionierung möglich, da der Stift ohne Laboraufwand austauschbar ist.

Eine schrittweise Verlagerung der Therapieposition des Unterkiefers ist sehr einfach dadurch möglich, dass an der Oberkieferplatte jeweils die Position der Positionierungsbohrung geändert wird. Hierzu wird mit geringem Aufwand die bisherige Positionierungsbohrung (beispielsweise mittels eines aushärtbaren Kunststoffmaterials) verschlossen und eine neue Bohrung an der gewünschten Position angebracht. Die Einstellung der sagittalen und lateralen Sollposition kann somit stufenlos und exakt durchgeführt werden. Dies ist dem Kieferorthopäden mit den ihm zur Verfügung stehenden Mitteln ohne Einschaltung eines Zahnlabors problemlos möglich.

Bei der erfindungsgemäßen kieferorthopädischen Regulierungsvorrichtung sind die Oberkieferplatte und die Unterkieferplatte nicht fest miteinander verriegelt. Dies kann der Kieferorthopäde nutzen, um mittels der Regulierungsvorrichtung ohne zusätzliche Apparaturen die exakte sagittale Istposition der Kiefer zueinander zu bestimmen. Hierzu öffnet der Benutzer der Vorrichtung die Kiefer, bis die Oberkieferplatte und die Unterkieferplatte vollständig voneinander getrennt sind und der Positionierungsstift die Positionierungsbohrung ganz verlassen hat. Nun sind Unterkiefer und Oberkiefer in sagittaler und transversaler Richtung relativ zueinander voll beweglich, so dass der Kieferorthopäde die Istposition mittels eines Zentrikregistrates (z.B. mit Hilfe eines selbstklebenden Wachsplättchens im Bereich der Bohrung an der Oberkieferplatte) oder eines Pfeilwinkelregistrates direkt mit der Apparatur ermitteln kann. Der Therapieerfolg ist sofort als Differenz zwischen der bisherigen Bohrung und der neuen Position des Positionierungsstiftes (im Wachsplättchen als Impression sichtbar) am Gegenkiefer in Millimetern messbar. Die neue Sollposition bestimmt der Kieferorthopäde nach Verschluss der alten Bohrung durch Einbringen einer neuen Bohrung mit dem gewünschten Abstand zur Wachsimpression in sagittaler und lateraler Richtung. Wird zum Verschluss der jeweils alten Bohrungen ein farbiger Kunststoff verwendet, kann anhand der farbig erkennbaren alten Bohrungen der Therapieverlauf sichtbar gemacht werden.

Vorteilhafterweise ist der Positionierungsstift bei der erfindungsgemäßen kieferorthopädischen Regulierungsvorrichtung entlang seiner Längsachse verstellbar ausgebildet. Daraus ergibt sich der Vorteil, dass der Positionierungsstift für die Erstellung eines Registrats zur Ermittlung der Therapieposition des Unterkiefers relativ zum Oberkiefer in die Unterkieferplatte gleichsam eingefahren werden kann. Somit kann das Registrat bei möglichst wenig geöffneten Kiefern erstellt werden. Dadurch wird eine Translation des Unterkiefers durch die Bisssperrung verhindert. Für die therapeutische Wirkung des Positionierungsstiftes wird dieser ausgefahren, um ein Herausgleiten des Stiftes aus der dazugehörigen Bohrung während des Tragens und damit einen Verlust der Kieferpositionierung zu vermeiden.

Gemäß einer sinnvollen Ausgestaltung der erfindungsgemäßen kieferorthopädischen Regulierungsvorrichtung ist der Positionierungsstift an seinem der Positionierungsbohrung zugewandten Ende konisch oder abgerundet ausgebildet. Hierdurch wird erreicht, dass der Positionierungsstift leicht in die Positionierungsbohrung eingeführt werden kann. Zudem ermöglicht die Konizität des Stiftes, dass die Konstruktion auch eine nicht exakt rechtwinklige Bohrung ohne Probleme erlaubt, da die Bohrung selbst nicht konisch, sondern zylindrisch ist.

Gemäß einer besonders praktikablen Ausgestaltung der erfindungsgemäßen kieferorthopädische Regulierungsvorrichtung ist eine in einer der Platten verankerte Hülse vorgesehen, wobei die Hülse ein Innengewinde zur Aufnahme eines hierzu korrespondierenden Außengewindes des Positionierungsstifts aufweist. Um eine ausreichende Stabilität zur Fixierung des Unterkiefers in der sagittalen Sollposition relativ zum Oberkiefer und gleichzeitig eine ausreichende Stabilität der Unterkieferplatte im anterioren Bereich zu gewährleisten, kann ein mit der Hülse verbundenes Verankerungselement vorgesehen sein, welches in das Kunststoffmaterial der Unterkieferplatte eingebettet ist. Hierdurch ergibt sich insgesamt eine besonders einfache und kostengünstige Herstellbarkeit der erfindungsgemäßen Regulierungsvorrichtung bei gleichzeitig guter Stabilität der Positionierungselemente.

Zweckmäßigerweise ist bei der erfindungsgemäßen kieferorthopädischen Regulierungsvorrichtung die Oberkieferplatte in wenigstens drei Segmente unterteilt, die durch wenigstens ein Verstellmittel miteinander verbunden sind und dadurch einstellbar gegeneinander verschiebbar sind. Durch diese Ausgestaltung ergibt sich die Möglichkeit, die Regulierungsvorrichtung gleichzeitig zur transversalen Korrektur des Oberkiefers zu verwenden. Die Oberkieferplatte kann beispielsweise dreiteilig aufgebaut sein, wobei die Oberkieferplatte im Frontzahnbereich ein vorders Segment aufweist, von welchem aus seitliche Segmente mittels eines Verstellmittels unabhängig voneinander nach lateral oder medial verstellt werden können. Das Frontzahnsegment enthält vorzugsweise die Positionierungsbohrung zur Aufnahme des Positionierungsstiftes und ist so relativ zur Unterkieferplatte fixiert. Die Seitenzahnsegmente der Oberkieferplatte sind transversal auf der Unterkieferplatte verschiebbar. Als Verstellmittel kommt zweckmäßigerweise eine Dehnschraube zum Einsatz, die an dem Frontzahnsegment über ein Verankerungsteil festgelegt ist und transversal ausgerichtet die beiden Seitenzahnsegmente der Oberkieferplatte mit dem Frontzahnsegment verbindet, so dass die beiden Seitenzahnsegmente durch Verstellen der Dehnschraube symmetrisch oder asymmetrisch auseinander geschoben oder einander angenähert werden können. Als Dehnschraube kann beispielsweise eine an sich bekannte, so genannte Bertoni Mehrsektorenschraube eingesetzt werden. Die Segmentschraube für das ventrale Segment ist bei Verwendung einer Bertoni Mehrsektorenschraube allerdings ohne aktive Funktion; es wird lediglich deren Verankerungsteil benötigt. Zweckmäßiger ist daher die Verwendung einer Dehnschraube über welche nur die seitlichen Segmente verstellbar miteinander verbunden sind, während das vordere Segment über ein entsprechendes Verankerungsteil fest mit der Dehnschraube verbunden ist.

Gemäß einer bevorzugten Ausführungsform sind die Oberkieferplatte und die Unterkieferplatte der erfindungsgemäßen kieferorthopädischen Regulierungsvorrichtung zusätzlich über wenigstens ein elastisch federndes Verbindungselement lösbar miteinander verbindbar. Die elastisch federnden Verbindungselemente ermöglichen eine gewisse Beweglichkeit des Oberkiefers relativ zum Unterkiefer, die für die transversale Nachentwicklung des Oberkiefers notwendig ist. Die sagittale und laterale Position des Unterkiefers relativ zum Oberkiefer bleibt aber exakt erhalten, wobei von den elastisch federnden Verbindungselementen gleichzeitig Rückstellkräfte aufgebracht werden, um die gewünschte Therapieposition des Unterkiefers zu gewährleisten. Dies kann beispielsweise dadurch realisiert werden, dass die Ober- und Unterkieferplatten im Bereich der Molaren und/oder Prämolaren seitliche Haken zur lösbaren Verbindung der Ober- und Unterkieferplatten mittels Gummiringen aufweisen.

Eine sinnvolle Ausgestaltung der erfindungsgemäßen kieferorthopädischen Regulierungsvorrichtung ergibt sich durch zusätzliche Ausstattung mit einem Lingualschild, Labial- und/oder Bukkalpelotten. Hierdurch können dentoalveoläre Nebenwirkungen der Regulierungsvorrichtung effektiv minimiert und die Einlagerung der Wangenschleimhaut verhindert werden.

Außerdem kann die erfindungsgemäße Regulierungsvorrichtung mit Headgear-Systemen bekannter Art problemlos gekoppelt werden.

Bei der Herstellung der erfindungsgemäßen kieferorthopädischen Regulierungsvorrichtung durch ein Zahnlabor werden fast ausschließlich übliche und kommerziell erhältliche Komponenten benötigt. Die einzigen zusätzlich erforderlichen Komponenten sind die spezielle Dehnschraube und das Positionierungselement.

Das Positionierungselement umfasst den Positionierungsstift und die Hülse zur Aufnahme des Positionierungsstifts, wobei die Hülse ein Innengewinde und der Positionierungsstift einen hierzu korrespondierenden Außengewindeabschnitt aufweist, so dass der Positionierungsstift entlang seiner Längsachse gegenüber der Hülse verstellbar ist. Die Hülse und der Positionierungsstift werden zweckmäßigerweise aus Metall gefertigt. Dabei kann ein mit der Hülse (z.B. durch Löten oder Schweißen) verbundenes Verankerungselement vorgesehen sein, welches zur Verankerung der Hülse in dem Kunststoffmaterial der Unterkieferplatte der Regulierungsvorrichtung dient. An dem von der Oberkieferplatte abgewandten Ende weist der Positionierungsstift zweckmäßigerweise einen Schraubenkopf auf. Mittels eines geeigneten Drehwerkzeugs kann der Positionierungsstift dann problemlos von unten durch eine entsprechende Öffnung in der Unterkieferplatte verstellt werden.

Die spezielle Dehnschraube der erfindungsgemäßen kieferorthopädischen Regulierungsvorrichtung ähnelt in ihrem Aufbau der Bertoni Mehrsektorenschraube. Die Segmentschraube für das ventrale Segment wird für die erfindungsgemäße Regulierungsvorrichtung allerdings nicht benötigt. Es wird daher zweckmäßigerweise eine spezielle Dehnschraube verwendet, die an dem vorderen Segment der Oberkieferplatte über ein nicht verstellbares Retentionselement festgelegt ist. Aufgrund der erheblichen Kräfte, die bei nächtlichem Bruxismus auf das vordere Segment der Oberkieferplatte einwirken, ist ein ausgedehntes passives Retentionselement anstelle der bei der Bertoni Mehrsektorenschraube vorhandenen Segmentschraube für das vordere Segment zweckdienlich.

Ein Ausführungsbeispiel der erfindungsgemäßen kieferorthopädischen Regulierungsvorrichtung wird im Folgenden unter Bezugnahme auf die Zeichnungen näher erläutert. Es zeigen:
- Fig. 1: geschnittene Seitenansicht der in den Mund eines Benutzers eingesetzten Regulierungsvorrichtung;
- Fig. 2: seitliche Draufsicht auf die Regulierungsvorrichtung;
- Fig. 3: Draufsicht auf die Regulierungsvorrichtung von dorsal nach ventral.

Die in den Figuren dargestellte kieferorthopädische Regulierungsvorrichtung besteht aus einer an den Oberkiefer 1 angepassten Oberkieferplatte 2 sowie einer an den Unterkiefer 3 angepassten Unterkieferplatte 4. Die beiden Platten bilden zusammen ein Doppelvorschubplatten-System bzw. ein Aktivator-System zur Korrektur sagittaler Kieferfehlstellungen. Die Platten 2 und 4 bestehen jeweils aus Kunststoff und sind in ihrer Kontur genau an die jeweiligen Kieferinnenseiten und die Innenseiten der Zähne 5, 6 angepasst und liegen an diesen an. An der Oberkieferplatte 2 ist ein mittlerer Zahnbügel 7 aus Metalldraht angeordnet, der ungefähr halbkreisförmig um die Frontalzähne 5 herumgeführt ist. Der Zahnbügel7 ist in üblicher Weise in dem Kunststoffmaterial der Oberkieferplatte 2 verankert. An der Unterkieferplatte 4 ist ein Lingualschild 8 an sich bekannter Art über einen stabilen Drahtbügel 9 angeordnet, der seinerseits in dem Kunststoffmaterial 4 verankert ist.

Mittels der Regulierungsvorrichtung soll eine sagittale Verschiebung des Unterkiefers 3 gegenüber dem Oberkiefer 1 nach ventral und/oder ventro-lateral erfolgen, um entsprechende Kieferfehlstellungen zu korrigieren. Hierzu ist an der Unterkieferplatte 4 ventral im Wesentlichen in der Mediansagittalen liegend ein Positionierungsstift 10 angeordnet. Dieser ist in einer an der Oberkieferplatte 2 angeordneten Positionierungsbohrung 11 axial beweglich geführt. Der Positionierungsstift 10 ist entlang seiner Längsachse verstellbar. Hierzu weist der Positionierungsstift 10 einen Außengewindeabschnitt 12 auf, der mit einem dazu korrespondierenden Innengewinde einer in der Unterkieferplatte 4 verankerten Hülse 13 zusammenwirkt. An der Unterseite des Außengewindeabschnitts 12 ist ein Schraubenkopf vorgesehen, so dass die Längsverstellung des Positionierungsstifts 11 von unten her durch eine in der Unterkieferplatte 4 angeordnete Bohrung 14 erfolgen kann. Mit der Hülse 13 ist ein Verankerungselement 15 verbunden, welches in das Kunststoffmaterial der Unterkieferplatte 4 eingebettet ist. Der Positionierungsstift 10 ist an seinem der Oberkieferplatte 2 zugewandten Ende konisch ausgebildet, damit er leicht in die Positionierungsbohrung 11 eingeführt werden kann.

Mit der in den Figuren dargestellten kieferorthopädischen Regulierungsvorrichtung ist auch eine asymmetrische transversale Aufweitung oder Verschmälerung des Oberkiefers möglich. Hierzu ist die Oberkieferplatte 2 in drei Segmente 2A, 2B und 2C unterteilt. Die Segmente 2A, 2B und 2C sind über eine an dem vorderen Segment 2B festgelegte Dehnschraube 16 miteinander verbunden. Mittels der Dehnschraube 16 sind die Segmente 2A, 2B und 2C transversal einstellbar gegeneinander verschiebbar. Dies ist möglich, da die Oberkieferplatte 2 und die Unterkieferplatte 4 relativ zueinander transversal beweglich sind. Die Dehnschraube ist über ein starres Retentionselement 17 an dem vorderen Segment 2B der Oberkieferplatte festgelegt ist. Die Positionierungsbohrung 11 für den Positionierungsstift 10 ist an diesem vorderen Segment 2B angeordnet, so dass die Position des vorderen Segments 2B relativ zur Unterkieferplatte 4 fixiert ist.

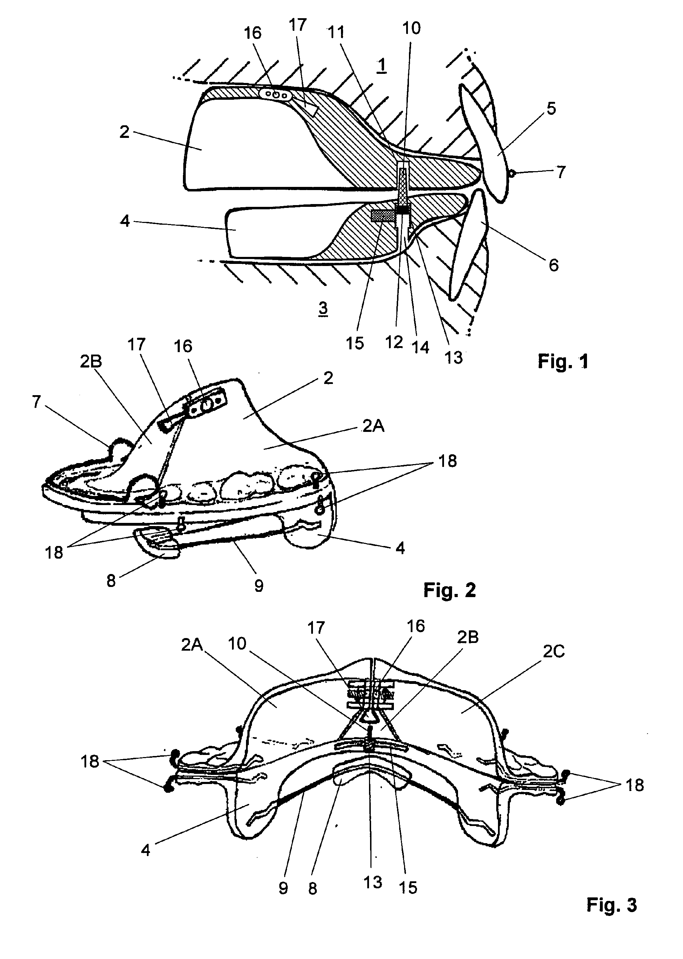

In den Fig. 2 und 3 sind seitliche Haken 18 zu erkennen. Diese dienen dazu, die Ober- und Unterkieferplatten lösbar mittels (nicht dargestellten) Gummiringen miteinander zu verbinden. Daraus ergibt sich eine elastisch federnde Verbindung der Unterkieferplatte 4 mit der Oberkieferplatte 2.

## Patentansprüche

1. Kieferorthopädische Regulierungsvorrichtung mit einer Oberkieferplatte (2), einer Unterkieferplatte (4) und mit an der Oberkieferplatte (2) und an der Unterkieferplatte (4) angeordneten Positionierungselementen, die derart zusammenwirken, dass eine sagittale und/oder transversale Verschiebung des Unterkiefers (3) gegenüber dem Oberkiefer (1) nach ventral und/oder lateral erfolgt,
**dadurch gekennzeichnet, dass** die Positionierungselemente einen an einer der Platten (2, 4) angeordneten Positionierungsstift (10) und eine an der jeweils anderen Platte (4, 2) angeordnete Positionierungsbohrung (11) umfassen, in welcher der Positionierungsstift (10) axial beweglich geführt ist.

2. Kieferorthopädische Regulierungsvorrichtung nach Anspruch 1, **dadurch gekennzeichnet, dass** der Positionierungsstift (10) an der Unterkieferplatte (4) ventral im Wesentlichen in der Mediansagittalen liegend angeordnet ist.

3. Kieferorthopädische Regulierungsvorrichtung nach Anspruch 1 oder 2, **dadurch gekennzeichnet, dass** der Positionierungsstift (10) entlang seiner Längsachse verstellbar ausgebildet ist.

4. Kieferorthopädische Regulierungsvorrichtung nach Anspruch 3, **dadurch gekennzeichnet, dass** der Positionierungsstift (10) an seinem der Positionierungsbohrung (11) zugewandten Ende konisch oder abgerundet ausgebildet ist.

5. Kieferorthopädische Regulierungsvorrichtung nach Anspruch 3 oder 4, **gekennzeichnet durch** eine in einer der Platten (2, 4) verankerte Hülse (13) mit einem Innengewinde zur Aufnahme eines hierzu korrespondierenden Außengewindes (12) des Positionierungsstifts (10).

6. Kieferorthopädische Regulierungsvorrichtung nach Anspruch 5, **gekennzeichnet durch** ein mit der Hülse (13) verbundenes Verankerungselement (15), welches in das Kunststoffmaterial der Platte (2, 4) eingebettet ist.

7. Kieferorthopädische Regulierungsvorrichtung nach einem der Ansprüche 1 bis 6, **dadurch gekennzeichnet, dass** die Oberkieferplatte (2) in wenigstens drei Segmente (2A, 2B, 2C) unterteilt ist, die durch wenigstens ein Verstellmittel (16) miteinander verbunden sind und **dadurch** einstellbar gegeneinander verschiebbar sind.

8. Kieferorthopädische Regulierungsvorrichtung nach Anspruch 7, **dadurch gekennzeichnet, dass** die Oberkieferplatte (2) in drei Segmente (2A, 2B, 2C), nämlich zwei seitliche Segmente (2A, 2C) und ein vorderes Segment (2B), unterteilt ist, wobei die Segmente (2A, 2B, 2C) über eine an dem vorderen Segment (2B) festgelegte Dehnschraube (16) einstellbar miteinander verbunden sind und wobei die Positionierungsbohrung (11) an dem vorderen Segment (2B) angeordnet ist.

9. Kieferorthopädische Regulierungsvorrichtung nach einem der Ansprüche 1 bis 8, **dadurch gekennzeichnet, dass** die Oberkieferplatte (2) und die Unterkieferplatte (4) zusätzlich über wenigstens ein elastisch federndes Verbindungselement lösbar miteinander verbindbar sind.

10. Kieferorthopädische Regulierungsvorrichtung nach Anspruch 9, **dadurch gekennzeichnet, dass** die Ober- und Unterkieferplatten (2, 4) im Bereich der der Molaren und/oder Prämolaren seitliche Haken (18) zur lösbaren Verbindung der Ober- und Unterkieferplatten (2, 4) mittels Gummiringen aufweisen.

11. Kieferorthopädische Regulierungsvorrichtung nach einem der Ansprüche 1 bis 10, **gekennzeichnet durch** ein Lingualschild (8), Labial- und/oder Bukkalpelotten.

12. Positionierungselement für eine kieferorthopädische Regulierungsvorrichtung nach einem der Ansprüche 1 bis 11, **dadurch gekennzeichnet, dass** das Positionierungselement einen Positionierungsstift (10) und eine Hülse (13) zur Aufnahme des Positionierungsstifts (10) umfasst, wobei die Hülse (13) ein Innengewinde und der Positionierungsstift (10) einen hierzu korrespondierenden Außengewindeabschnitt (12) aufweist, so dass der Positionierungsstift (10) entlang seiner Längsachse gegenüber der Hülse (13) verstellbar ist.

13. Positionierungselement nach Anspruch 12, **dadurch gekennzeichnet, dass** der Positionierungsstift (10) an seinem ersten Ende konisch oder abgerundet ausgebildet ist.

14. Positionierungselement nach Anspruch 12 oder 13, **gekennzeichnet durch** ein mit der Hülse (13) verbundenes Verankerungselement (15), zur Verankerung der Hülse (13) in dem Kunststoffmaterial einer Ober- oder Unterkieferplatte (2, 4) der kieferorthopädischen Regulierungsvorrichtung.

15. Positionierungselement nach einem der Ansprüche 12 bis 14, **dadurch gekennzeichnet, dass** der Positionierungsstift (10) an seinem zweiten Ende einen Schraubenkopf aufweist.

16. Dehnschraube für eine kieferorthopädische Regulierungsvorrichtung nach einem der Ansprüche 1 bis 11, **gekennzeichnet durch** ein Verstellmittel (16), **durch** welches zwei Segmente (2A, 2C) einer Oberkieferplatte (2) der Regulierungsvorrichtung miteinander verbindbar und **dadurch** einstellbar gegeneinander verschiebbar sind, wobei das Verstellmittel (16) über ein Retentionselement (17) mit einem dritten Segment (2B) der Oberkieferplatte starr verbindbar ist.
